# EUROPEAN PATENT SPECIFICATION

(11) **EP 4 339 241 B1**
(45) Date of publication and mention of the grant of the patent: **25.11.2026**
(21) Application number: 22807429.0
(22) Date of filing: 09.05.2022
(51) Int. Cl.: C08L 23/26, B32B 27/32, C08F 8/46, C08F 10/02, C08L 23/06, C08L 23/08, C08L 29/04, C08L 77/00, B32B 27/30

(54) **COMPATIBILIZER, RECYCLING AID, AND COMPATIBILIZATION METHOD**
KOMPATIBILISIERUNGSMITTEL, RECYCLINGHILFE UND KOMPATIBILISIERUNGSVERFAHREN
AGENT DE COMPATIBILITÉ, AGENT AUXILIAIRE DE RECYCLAGE, ET PROCÉDÉ DE COMPATIBILISATION

(30) Priority: 10.05.2021 JP 2021079460; 10.05.2021 JP 2021079461
(43) Date of publication of application: 20.03.2024
(73) Proprietor: Mitsubishi Chemical Corporation, Tokyo 100-8251 (JP)
(72) Inventor: TAKASHIMA, Masaru, Tokyo 100-8251 (JP); NAKANISHI, Shinji, Tokyo 100-8251 (JP)
(74) Representative: Hoffmann Eitle
(86) International application number: PCT/JP2022/019647
(87) International publication number: WO 2022/239728

(56) References cited:
- EP-B1- 2 495 268
- JP-A- 2003 013 024
- JP-A- 2018 119 101
- JP-A- 2019 001 915
- JP-A- 2019 001 916
- JP-A- S60 110 740

## Description

### Technical Field

The present invention relates to a compatibilizer and a recycling agent that use a modified ethylene copolymer. The present invention also relates to a compatibilization method using the modified ethylene copolymer.

### Background Art

A recycling technique for reducing the amount of plastic packaging waste has been known in which the following polymer composition is subjected to granulation/forming to be recycled as regrind layers or recycled layers of multilayer packaging materials:
polymer compositions prepared by collecting trimmings from and multilayer packaging material products in the production process of multilayer packaging materials using nonpolar polymers, such as polyolefin, and barrier polar polymers, such as ethylene/vinyl alcohol copolymer (EVOH), finely pulverizing the collected materials by grinding, mashing, or the like, and melt-kneading the pulverized materials.

However, the ethylene/vinyl alcohol copolymer and the polyolefin in the polymer composition thus obtained are less compatible. Consequently, the ethylene/vinyl alcohol copolymer forms aggregates in regrind or recycled layers. Such aggregates degrade transparency and mechanical strength, thus affecting the quality of recycled multilayer packaging materials. Hence, when such recycling is repeated, recyclability is poor.

For addressing such problems, a specific maleic anhydride-modified ethylene copolymer is known to be a compatibilizer used to compatibilize ethylene/vinyl alcohol copolymers with polyolefin. For example, Patent Literatures 1 and 2 specifically describe maleic anhydride-modified ethylene/octene copolymers as maleic anhydride-modified ethylene copolymers.
JP S60 110740 A describes an impact resistance improver including a modified propylene/α-olefin copolymer obtained by graft-polymerization.
EP 2 495 268 B1 describes a composition comprising a propylene-based interpolymer, a peroxide, a grafting agent, and a coagent.
JP 2019-001915 A describes a polyamide resin composition comprising a polyamide resin, an ethylene-α-olefin copolymer and/or an ethylene-α-olefin copolymer graft-modified with an unsaturated carboxylic acid or a derivative thereof.
JP 2003-013024 A describes an adhesive polymer comprising a modified ethylene-α-olefin copolymer.
JP 2018-119101 A describes a transparent polyamide resin composition comprising a transparent polyamide of a modified ethylene polymer grafted with an unsaturated carboxylic acid or a derivative thereof.
JP 2019-001916 A describes a polyamide resin composition comprising a polyamide resin, an ethylene/α-olefin copolymer and an ethylene/α-olefin copolymer graft-modified with an unsaturated carboxylic acid or a derivative thereof.

[Patent Literature 1] WO2014/070237 A1
[Patent Literature 2] WO2016/109023 A1

If a polymer composition containing the ethylene/vinyl alcohol copolymer and the polyolefin, and a maleic anhydride-modified ethylene copolymer described in Patent Literatures 1 and 2, specifically a maleic anhydride-modified ethylene-octene copolymer, is prepared in the above-described recycling process, the transparency of the resulting polymer composition is improved.

Unfortunately, this polymer composition produces foreign matter (called "eye mucus" sometimes) adherent to the vicinity of the extrusion outlet (die head) in the extrusion step for granulation/forming after melt-kneading the polymer composition in some cases. The foreign matter adherent to the vicinity of the extrusion outlet reduces productivity because it must be removed. Also, if the polymer composition is contaminated with the foreign matter after granulation/forming, the quality of the granulated or formed articles may be degraded. Additionally, when the polymer composition is repeatedly recycled to the regrind or recycled layer of multilayer packaging materials, recyclability may be degraded depending on the polyolefin.

### Summary of Invention

An object of the present invention is to provide a compatibilizer using a modified ethylene copolymer, which reduces foreign matter produced in the extrusion step without degrading the transparency of the polymer composition obtained by compatibilizing a nonpolar polymer, such as polyolefin, with a barrier polar polymer, such as ethylene/vinyl alcohol copolymers.

Another object of the present invention is to provide a recycling agent using a modified ethylene copolymer, which reduces foreign matter produced in the extrusion step without degrading the transparency of the polymer composition obtained in recycling trimmings from the process of producing multilayer packaging materials using nonpolar polymers, such as polyolefin, and barrier polar polymers, such as ethylene/vinyl alcohol copolymers.

Still another object of the present invention is to provide a compatibilization method using such a modified ethylene copolymer.

The present inventors identified that using a specific modified ethylene copolymer as a compatibilizer can reduce foreign matter produced in the extrusion step without degrading the transparency of the polymer composition.

The present inventors also identified that using a specific modified ethylene copolymer as a recycling agent in a recycling process can reduce foreign matter produced in the extrusion step without degrading the transparency of the polymer composition obtained by the recycling.

Also, the present inventors identified that using the specific modified ethylene copolymer enables effective compatibilization of polar polymers with nonpolar polymers.

The present invention has the following features.

Use of a modified ethylene copolymer as a compatibilizer as further defined in claim 1.

Use of a a modified ethylene copolymer as a recycling agent as further defined in claim 2.

A compatibilization method comprising: compatibilizing a polar polymer with a nonpolar polymer in the presence of a modified ethylene copolymer having a melt flow rate (MFR: 190°C, 2.16 kg) of 15 g/10 min to 39 g/10 min and produced by modifying a copolymer of an ethylene monomer and one or two or more of α-olefin monomers with 4 to 8 carbon atoms with an unsaturated carboxylic acid and/or an anhydride thereof.

### Advantageous Effects of Invention

The compatibilizer and compatibilization method of the present invention can reduce foreign matter produced in the extrusion step without degrading the transparency of the polymer composition obtained by compatibilizing a nonpolar polymer, such as polyolefin, with a barrier polar polymer, such as ethylene/vinyl alcohol copolymer.

The recycling agent of the present invention can reduce foreign matter produced in the extrusion step without degrading the transparency of the polymer composition (hereinafter also referred to as "recycling composition" or "regrind composition" in some cases) obtained in recycling trimmings from the production process or the like of multilayer packaging materials using nonpolar polymers, such as polyolefin, and barrier polar polymers, such as ethylene/vinyl alcohol copolymers (this effect, hereinafter, also referred to as "recyclability").

The modified ethylene copolymer according to the present invention is not limited in any way for use as a recycling agent for polyolefin or other nonpolar polymers and ethylene/vinyl alcohol copolymers or other barrier polar polymers that are used as recycling materials. When either the nonpolar polymer or the polar polymer or both are virgin resin, the modified ethylene copolymer according to the present invention can be used effectively as a compatibilizer to compatibilize these polymers.

### Description of Embodiments

Embodiments of the present invention will be described in detail below. The present invention is not limited to the following description and can be modified and practiced in any manner that is consistent with the scope of the present invention.

In this specification, when numerical values or physical property values are expressed by using "to" with preceding and following numbers, it is to be understood that the preceding and following numbers are included.

In the following description, monomeric units contained in a copolymer may be simply referred to as "units". For example, a monomeric unit based on propylene may be referred to as a "propylene unit", and similarly, monomeric units based on ethylene and α-olefin may be referred to as an "ethylene unit" and an "α-olefin unit", respectively.

In the present invention, the melt flow rate (MFR) and density of polymers and the grafting ratio of modified polymers are values measured as described below.

### <MFR>

The MFR is measured according to JIS K 7210 at 190°C and a load of 2.16 kg.

### <Density>

The density is measured by the immersion method according to JIS K 7112.

### <Grafting Ratio>

The grafting ratio (also referred to as the amount of modification or amount of grafting) of a modified polymer, such as a modified ethylene copolymer, is the proportion of the unsaturated carboxylic acid and/or its anhydride (hereinafter also referred to as "unsaturated carboxylic acid component") grafted onto the raw material polymer, described later, to the modified polymer when measured with an infrared spectrometer.

The proportion of the unsaturated carboxylic acid component can be determined, for example, by measuring the absorption specific to unsaturated carboxylic acids, more specifically the carbonyl characteristic absorption in the range of 1,900 cm⁻¹ to 1,600 cm⁻¹ (in the C=O stretching vibration band), of unsaturated carboxylic acids in a sample formed by pressing the modified polymer into a sheet of about 100 µm in thickness.

The grafting ratio can also be determined from a calibration curve previously prepared in the above manner.

### [Compatibilizer]

The compatibilizer of the present invention contains a modified ethylene copolymer produced by modifying a copolymer of an ethylene monomer and one or two or more of α-olefin monomers with 4 to 8 carbon atoms with an unsaturated carboxylic acid and/or its anhydride (thus produce copolymer is hereinafter also referred to as the "modified ethylene copolymer of the present invention"), and the melt flow rate (MFR: 190°C, 2.16 kg) of this modified ethylene copolymer is 15 g/10 min to 39 g/10 min.

The term compatibilizer refers to a substance that compatibilize a nonpolar material and a polar material and produces an effect of reducing a particle size of dispersed material.

In the present invention, the use of a modified ethylene copolymer graft-modified with an unsaturated carboxylic acid component enables barrier polar polymers, such as ethylene/vinyl alcohol copolymers, to be finely dispersed in polyolefin or any other nonpolar polymer. Consequently, the mechanical strength and transparency of polymer compositions or recycling compositions in which an ethylene/vinyl alcohol copolymer or any other barrier polar polymer is dispersed can be improved.

When the material to be compatibilized pertains to recycling, the compatibilizer of the present invention is referred to as a recycling agent.

For example, when the compatibilizer of the present invention is used as a recycling agent for melt-kneading a ground or otherwise finely pulverized material of trimmings collected from the production process of multilayer packaging materials using a nonpolar polymer such as polyolefin and a barrier polar polymer such as an ethylene/vinyl alcohol copolymer, the nonpolar polymer such as polyolefin and the barrier polar polymer such as an ethylene/vinyl alcohol copolymer are compatibilized, and the compatibilized materials thus can be recycled into regrind layers of multilayer packaging materials through granulation/forming while reducing foreign matter and degradation of transparency.

Thus, using the compatibilizer or recycling agent of the present invention, mainly containing a modified ethylene copolymer, can reduce the particle size of the barrier polar polymers such as ethylene/vinyl alcohol copolymers dispersed in the nonpolar polymers such as polyolefin and improve transparency and mechanical strength. Also, the regrind composition may contain a low-molecular-weight substance to produce the effect of compatibilizing the polar groups of low-molecular-weight components produced in the extruder. Consequently, the adherent low-molecular-weight component like eye mucus can be reduced, thus reducing foreign matter adherent to the vicinity of the extrusion outlet.

Nonpolar polymers include polyolefins, such as polypropylene-based polymers and polyethylene-based polymers. The compatibilizer of the present invention is preferably used particularly for compatibilizing polyethylene-based polymers and polar polymers.

### <Modified ethylene copolymer>

Examples of α-olefin monomers having 4 to 8 carbon atoms constituting the modified ethylene copolymer of the present invention include one or more of 1-butene, 3-methyl-1-butene, 1-pentene, 4-methyl-1-pentene, 4,4-dimethyl-1-pentene, 1-hexene, 4-methyl-1-hexene, 1-heptene and 1-octene can be used. Among these, α-olefin monomers having 4 to 6 carbon atoms are preferred, and α-olefin monomers having 4 carbon atoms, i.e. 1-butene, are particularly preferred.

Examples of modified ethylene copolymers include modified ethylene-butene copolymers, modified ethylene-hexene copolymers, and modified ethylene-octene copolymers. Among these, from the viewpoint of recyclability, modified ethylene-butene copolymers and modified ethylene-hexene copolymers are preferable, and modified ethylene-butene copolymers are particularly preferable.

The modified ethylene copolymer may contain monomeric units other than the ethylene monomer and the above-described α-olefin monomers.

The MFR (190°C, a load of 2.16 kg) of the modified ethylene copolymer of the present invention is 15 g/10 min to 39 g/10 min. The modified ethylene copolymer having an MFR in this range can reduce foreign matter produced in the extrusion step without degrading transparency and prevent the decrease in mechanical strength of the film (hereinafter also referred to as recycled film) formed of the polymer composition or recycling composition as well as keep its appearance good.

The density of the modified ethylene copolymer of the present invention is preferably 0.855 g/cm³ to 0.895 g/cm³. The modified ethylene copolymer having a density in this range can reduce foreign matter produced in the extrusion step without degrading transparency and prevent the decrease in mechanical strength of the recycled film as well as keep its appearance good.

### <Ethylene Copolymer>

The ethylene copolymer to be modified with an unsaturated carboxylic acid component may be any known ethylene copolymer without particular limitation, provided that the above-described modified ethylene copolymer can be obtained.

The MFR (190°C, a load of 2.16 kg) of the ethylene copolymer (hereinafter also referred to as "raw material polymer") to be modified is preferably, but is not limited to, 18 g/10 min to 50 g/10 min. The raw material polymer having an MFR in this range tends to be easier to modify into the intended modified ethylene copolymer even if the MFR is changed by the modification.

Preferably, the raw material polymer has a density of 0.855 g/cm³ to 0.895 g/cm³.

Commercially available products may also be used as the raw material polymer suitable for the present invention. For example, it may be one satisfying the properties as mentioned above, appropriately selected from "TAFMER (registered trademark)" series produced by Mitsui Chemicals, Inc.

The ethylene copolymer, or raw material polymer, may be an individual substance or a combination of two or more substances having different physical properties or compositions.

### <Graft Modification>

Examples of unsaturated carboxylic acids that graft-modify ethylene copolymers include α,β-ethylenically unsaturated carboxylic acids such as acrylic acid, maleic acid, fumaric acid, tetrahydrofumaric acid, itaconic acid, citraconic acid, crotonic acid and isocrotonic acid. Examples of anhydrides of unsaturated carboxylic acids include 2-octen-1-yl succinic anhydride, 2-dodecen-1-yl succinic anhydride, 2-octadecen-1-yl succinic anhydride, maleic anhydride, 2,3-dimethylmaleic anhydride, bromomaleic anhydride, dichloromaleic anhydride, citraconic anhydride, itaconic anhydride, 1-butene-3,4-dicarboxylic anhydride, 1-cyclopentene- 1,2-dicarboxylic anhydride, 1,2,3,6-tetrahydrophthalic anhydride, 3,4,5,6-tetrahydrophthalic anhydride, exo-3,6-epoxy-1,2,3 ,6-tetrahydrophthalic anhydride, 5-norbornene-2,3-dicarboxylic anhydride, methyl-5-norbornene-2,3-dicarboxylic anhydride, endo-bicyclo[2.2.2]octo-5 -ene-2,3-dicarboxylic anhydride, and bicyclo[2.2.2]oct-7-ene-2,3,5,6-tetracarboxylic anhydride.

Such an unsaturated carboxylic acid component may be appropriately selected according to the ethylene copolymer to be modified and modification conditions. The unsaturated carboxylic acid component may be an individual compound or a combination of two or more compounds.

The unsaturated carboxylic acid component may be dissolved in an organic solvent before use.

The graft modification of an ethylene copolymer can be performed by adding an unsaturated carboxylic acid component and graft-polymerizing the unsaturated carboxylic acid component onto the ethylene copolymer, preferably, in the presence of a radical generator.

Examples of radical generators used here include organic and inorganic peroxides such as t-butyl hydroperoxide, cumene hydroperoxide, 2,5-dimethylhexane-2,5-dihydroperoxide, 2,5-dimethyl-2,5 -bis(t-butyloxy)hexane, 3,5,5-trimethylhexanoyl peroxide, t-butyl peroxybenzoate, benzoyl peroxide, m-toluoyl peroxide, dicumyl peroxide, 1,3-bis(t-butylperoxyisopropyl)benzene, dibutyl peroxide, methyl ethyl ketone peroxide, potassium peroxide, and hydrogen peroxide; azo compounds such as 2,2'-azobisisobutyronitrile, 2,2' -azobis(isobutyramide) dihalide, 2,2'-azobis[2-methyl-N-(2-hydroxyethyl)propionamide], and azodi-t-butane; carbon radical generators such as dicumyl.

The radical generator may be selected as desired according to the ethylene copolymer to be subjected to modification reaction, the unsaturated carboxylic acid component added as the modification agent, and modification conditions. The radical generator may be an individual compound or a combination of two or more compounds.

The radical generator may be dissolved in an organic solvent before use.

The modification reaction for obtaining the modified ethylene copolymer of the present invention may be conducted by various known reaction processes, including a melt-kneading reaction, a solution reaction, and a suspension-dispersion reaction. In general, the modification reaction is preferably a melt-kneading reaction.

For the melt-kneading reaction, the above-mentioned constituents can be uniformly mixed in a predetermined proportion and then melt-kneaded. A Henschel mixer, ribbon blender, V-type blender, or the like may be used for mixing. Melt-kneading uses a Banbury mixer, kneader, roll, single-screw kneading extruder, or multi-screw kneading extruder, such as a twin screw kneading extruder.

Melt-kneading is generally performed at 100°C or more, preferably 120°C or more, and more preferably 150°C or more, and also generally at 300°C or less, preferably 280°C or less, and more preferably 250°C or less, to prevent the polymer from thermally degrading.

The amount of the unsaturated carboxylic acid component added as the modification agent is generally 0.01 part by mass or more, preferably 0.05 part by mass or more, and more preferably 0.1 part by mass or more, and also generally 30 parts by mass or less, preferably 5 parts by mass or less, and more preferably 4 parts by mass or less, relative to 100 parts by mass of the raw material polymer, namely ethylene copolymer. Such an amount of unsaturated carboxylic acid added enables economical and sufficient modification.

The amount of the radical generator added is generally 0.001 part by mass or more, preferably 0.005 part by mass or more, and more preferably 0.01 part by mass or more, and also generally 1 part by mass or less, preferably 0.5 part by mass or less, and more preferably 0.1 part by mass or less, relative to 100 parts by mass of the raw material polymer, namely ethylene copolymer. By controlling the amount of the radical generator added equal to or higher than the above lower limit, sufficient modification can be ensured. By controlling the amount of the radical generator lower than or equal to the above upper limit, the increase in molecular weight (increase in viscosity) of the ethylene copolymer during modification can be suppressed in a desired range, and the intended modified ethylene copolymer tends to be easy to obtain.

The modification reaction includes mainly a graft polymerization reaction that grafts the unsaturated carboxylic acid component onto the ethylene copolymer and also a crosslinking reaction. This crosslinking tends to increase the molecular weight of the resulting modified product and increase the melt viscosity accordingly. Therefore, excessive use of the radical generator facilitates the graft polymerization reaction but, undesirably, easily causes a crosslinking reaction leading to an increased melt viscosity.

### <Grafting Ratio>

Preferably, the grafting ratio of the modified ethylene copolymer of the present invention is 0.1% to 1.0% by mass, more preferably 0.6% to 1.0% by mass, and still more preferably 0.8% to 1.0% by mass. When the grafting ratio is equal to or higher than the above lower limit, good recyclability can be obtained. When the grafting ratio is excessively high, a lot of discoloration or the like occurs, adversely affecting the appearance or the kike of the resulting recycled film. Accordingly, the grafting ratio of the modified ethylene copolymer is preferably lower than or equal to the above upper limit.

### <Modified Ethylene Copolymer Composition>

When the modified ethylene copolymer of the present invention is used as a compatibilizer or the like, it may be used in the form of a modified ethylene copolymer composition containing any other additives, polymers, or the like (these are hereinafter referred to as "other constituents") according to the application to such an extent as not to adversely affect the effect of the present invention.

Such other constituents may be used individually or in a combination of any two or more constituents with any proportions.

For example, additives include heat stabilizers and antioxidants, specifically hindered phenols, phosphorus compounds, hindered amines, sulfur compounds, copper compounds, and alkali metal halides.

For the mixing method, in practice, the modified ethylene copolymer and, optionally, other constituents are mixed preferably by melt-kneading, thus preparing a modified ethylene copolymer composition as the compatibilizer or recycling agent of the present invention. Other constituents may be added to the ethylene copolymer before modification, and the above-described graft modification may be performed simultaneously with the mixing with other constituents. Alternatively, other constituents may be added to the modified ethylene copolymer after being graft-modified.

More specifically, in the melt-kneading, the modified ethylene copolymer of the present invention or an ethylene copolymer and, optionally, other constituents are mixed in a predetermined proportion with a Henschel mixer, ribbon blender, V-type blender, or the like and then kneaded in a multi-screw kneading extruder, for example, a twin-screw kneading extruder TEX 25 manufactured by the Japan Steel Works, Ltd.

As with the temperature in the graft modification, the melt-kneading temperature of the constituents is generally 100°C to 300°C, preferably 120°C to 280°C, and more preferably 150°C to 250°C.

The order and method of kneading the constituents are not particularly limited. The modified ethylene copolymer of the present invention or the ethylene copolymer and optionally added other constituents may be kneaded at one time. Alternatively, the modified ethylene copolymer of the present invention or the ethylene copolymer and a part or some of the optionally added other constituents may be kneaded in advance, and then the rest may be kneaded.

### [Compatibilization Method]

The compatibilization method of the present invention includes compatibilizing a polar polymer with a nonpolar polymer in the presence of the modified ethylene copolymer of the present invention, that is, a modified ethylene copolymer having a melt flow rate (MFR: 190°C, 2.16 kg) of 15 g/10 min to 39 g/10 min and produced by modifying a copolymer of an ethylene monomer and one or two or more of α-olefin monomers with 4 to 8 carbon atoms with an unsaturated carboxylic acid and/or its anhydride.

The nonpolar polymer may be polyolefin-based polymer (a) described later, such as a polypropylene-based polymer or a polyethylene-based polymer. The present invention is effective particularly when polyethylene-based polymers are compatibilized with polar polymers.

The polar polymer may be polar polymer (b) described later, preferably barrier polymers such as ethylene/vinyl alcohol copolymers.

The polar and nonpolar polymers can be compatibilized in any proportion without particular limitation. In an embodiment, the proportion of the polar polymer may be compatibilized in a wide range of 1 to 50 parts by mass relative to 100 parts by mass of the nonpolar polymer.

In the compatibilization method of the present invention, the amount of the modified ethylene copolymer used is not particularly limited. In an embodiment, it is preferably 0.1 to 25 parts by mass, particularly 0.5 to 15 parts by mass, and more particularly 1 to 10 parts by mass relative to 100 parts by mass of the nonpolar polymer. When used in an amount equal to or higher than the above lower limit, the modified ethylene copolymer can produce a satisfactory compatibilization effect. When the modified ethylene copolymer is used in an amount lower than or equal to the above upper limit, the overreaction of the polar polymer with the modified ethylene copolymer tends to easily be suppressed.

The modified ethylene copolymer may be used as the above-described modified ethylene copolymer composition.

In the compatibilization method of the present invention, the compatibilization system may contain other constituents apart from the modified ethylene copolymer, the polar polymer, and the nonpolar polymer.

### [Polymer Composition]

The modified ethylene copolymer of the present invention can be used to prepare a highly recyclable polymer composition (hereinafter also referred to as the "polymer composition of the present invention").

Preferably, the polymer composition of the present invention contains 0.1 to 20 parts by mass of at least one polar polymer (b) selected from ethylene/vinyl alcohol-based copolymer (b1) (hereinafter also referred to as "EVOH (b1)" ) and polyamide-based polymer (b2) and 0.1 to 25 parts by mass of acid-modified polyolefin (d) relative to 100 parts by mass of polyolefin-based polymer (a).

Acid-modified polyolefin (d) is the modified ethylene copolymer of the present invention having a melt flow rate (MFR: 190°C, 2.16 kg) of 15 g/10 min to 39 g/10 min and produced by modifying a copolymer of an ethylene monomer and one or two or more of α-olefin monomers with 4 to 8 carbon atoms with an unsaturated carboxylic acid and/or its anhydride.

The polymer composition of the present invention may further contain another acid-modified polyolefin (c) having a different melt flow rate from acid-modified polyolefin (d) .

### <Polyolefin-based Polymer (a)>

Examples of polyolefin-based polymer (a) include polypropylene; propylene-based copolymers produced by copolymerizing propylene and α-olefin, such as ethylene, 1-butene, 1-hexene, or 4-methyl-1-pentene; polyethylenes, such as low-density polyethylene, linear low-density polyethylene, medium-density polyethylene, and high-density polyethylene; ethylene-based copolymers produced by copolymerizing ethylene and α-olefin, such as 1-butene, 1-hexene, or 4-methyl-1-pentene; and poly(1-butene) and poly(4-methyl-1-pentene) .

Polyolefin-based polymer (a) may be an individual substance or a mixture of two or more substances containing different copolymer components or having different physical properties.

In particular, propylene-based polymers, such as polypropylene and propylene copolymers, and ethylene-based polymers, such as polyethylene and ethylene copolymers, are preferable as polyolefin-based polymer (a).

From the viewpoint of forming heat-resistant formed products, propylene-based polymers are preferred as polyolefin-based polymer (a), more preferably polypropylene.

From the viewpoint of obtaining highly transparent formed products, ethylene polymers are preferred as polyolefin-based polymer (a), more preferably high-density polyethylene.

The melt flow rate (MFR: 190°C or 210°C, 2.16 kg) of polyolefin-based polymer (a) is preferably 0.01 g/10 min to 10 g/10 min. When the MFR of polyolefin-based polymer (a) is 0.01 g/10 min or more, the difference in melt viscosity between polar polymer (b) and polyolefin-based polymer (a) is not so large that the polar polymer (b) can disperse favorably in the polymer composition. Thus, the resulting formed product has high impact resistance. When the MFR of polyolefin-based polymer (a) is 10 g/10 min or less, the resulting formed product has high impact resistance. More preferably, the MFR of polyolefin-based polymer (a) is 5 g/10 g min or less, still more preferably 3 g/10 min or less, and particularly 2 g/10 min or less.

When polyolefin-based polymer (a) is a mixture of a plurality of polymers, the MFR of polyolefin-based polymer (a) is the weighted average of the MFRs of the polymers in the mixture by the mass ratio.

Similarly, when EVOH (b1), polyamide-based polymer (b2), acid-modified polyolefin (c), and acid-modified polyolefin (d), which are all described later, are mixtures of a plurality of polymers, their MFRs are determined as in the case of polyolefin-based polymer (a).

<Polar Polymer (b)>

Polar polymer (b) is at least one barrier polar polymer selected from EVOH (b1) and polyamide-based polymer (b2).

Polar polymer (b) may be a mixture of one or two or more of EVOH (b1) and one or two or more of polyamide-based polymer (b2). The proportion of EVOH (b1) and polyamide-based polymer (b2) in the mixture is not particularly limited for such a mixture.

### (EVOH (b1))

EVOH (b1) is produced by saponification of ethylene/vinyl ester copolymers. Vinyl acetate is a typical vinyl ester, but other fatty acid vinyl esters (vinyl propionate, vinyl pivalate, etc.) may also be used. Ethylene/vinyl ester copolymers are produced by any known polymerization process, such as solution polymerization, suspension polymerization, or emulsion polymerization. The saponification of ethylene/vinyl ester copolymers may also be performed by a known process.

The ethylene unit content of EVOH (b1) is determined according to ISO 14663 and is preferably 20% to 60% by mole. When the ethylene unit content is 20% by mole or more, EVOH (b1) in the polymer composition exhibits good gas barrier properties and melt formability under high humidity conditions. More preferably, the ethylene unit content of EVOH (b1) is 23% by mole or more. When the ethylene unit content is 60% by mole or more, barrier properties are good. More preferably, the ethylene unit content of EVOH (b1) is 55% by mole or less, still more preferably 50% by mole or less, and particularly less than 50% by mole.

The saponification degree of the vinyl ester unit of EVOH (b1), which is a value measured according to JIS K 6726 (note that EVOH is in a solution, uniformly dissolved in a water/methanol solvent), is preferably 80% by mole or more, more preferably 98% by mole or more, and still more preferably 99% by mole or more from the viewpoint of barrier properties, thermal stability, and moisture resistance.

The melt flow rate (MFR: 210°C, 2.16 kg) of EVOH (b1) is preferably 0.1 g/10 min to 100 g/10 min. When the MFR of EVOH (b1) is 100 g/10 min or less, the difference in melt viscosity between EVOH (b1) and acid-modified polyolefin (c) is not so large that the EVOH (b1) can disperse favorably in the polymer composition, providing good thermally stability. More preferably, the MFR of EVOH (b1) is 50 g/10 min or less, still more preferably 30 g/10 min or less. When the MFR of EVOH (b1) is 0.1 g/10 min or more, the difference in viscosity from acid-modified polyolefin (d) is not so large that the EVOH (b1) can disperse favorably in the polymer composition, providing good impact resistance. More preferably, the MFR of EVOH (b1) is 0.5 g/10 min or more.

EVOH (b1) may be copolymerized with polymerizable monomers other than ethylene and vinyl esters in a range not adversely affecting the advantageous effects of the invention, generally in the range of 5% by mole or less. Examples of such polymerizable monomers include α-olefins, such as propylene, isobutene, α-octene, α-dodecene, and α-octadecene; hydroxy group-containing α-olefins, such as 3-butene-1-ol, 4-pentene-1-ol, and 3-butene-1,2-diol, and their esterified or acylated derivatives, namely hydroxy group-containing α-olefin derivatives; hydroxymethylvinylidene diacetates, such as 1,3-diacetoxy-2-methylenepropane, 1,3-dipropionyloxy-2-methylenepropane, and 1,3-dibutylonyloxy-2-methylenepropane; unsaturated carboxylic acids and their salts, partial or complete alkyl esters, nitriles, amides, and anhydrides; unsaturated sulfonic acids and their salts; vinylsilane compounds; vinyl chloride; and styrene.

EVOHs subjected to "post-modification" such as urethanation, acetalization, cyanoethylation, and oxyalkylenation may also be used as EVOH (b1).

EVOH (b1) may be an individual substance or a mixture of two or more substances varying in vinyl ester or different in ethylene unit content or physical properties.

### (Polyamide-based polymer (b2))

A known polymer can be used as the polyamide-based polymer (b2).

Specifically, homopolymers such as polycapramide (nylon 6), poly-ω-aminoheptanoic acid (nylon 7), poly-ω-aminononanoic acid (nylon 9), polyundecaneamide (nylon 11), and polylauryllactam (nylon 12) are examples.

Examples of polyamide-based copolymers include aliphatic polyamides such as polyethylenediamineadipamide (nylon 26), polytetramethyleneadipamide (nylon 46), polyhexamethyleneadipamide (nylon 66), polyhexamethylenesebacamide (nylon 610), polyhexamethylene dodecamide (nylon 612), polyoctamethylene adipamide (nylon 86), polydecamethylene adipamide (nylon 108), caprolactam/lauryllactam copolymer (nylon 6/12), caprolactam/ω - aminononanoic acid copolymer (nylon 6/9), caprolactam/hexamethylenediammonium adipate copolymer (nylon 6/66), lauryllactam/hexamethylenediammonium adipate copolymer (nylon 12/66), ethylenediamine adipamide/hexamethylenediammonium adipate copolymer (nylon 26/66), caprolactam/hexamethylenediammonium adipate/hexamethylenediammonium sebacate copolymer (nylon 66/610), and ethylene ammonium adipate/hexamethylenediammonium adipate/hexamethylenediammonium sebacate copolymer (nylon 6/66/610); aromatic polyamides such as polyhexamethyleneisophthalamide, polyhexamethyleneterephthalamide, polymetaxylyleneadipamide, hexamethyleneisophthalamide/terephthalamide copolymer, polyp-phenylene terephthalamide and poly-p-phenylene-3,4'-diphenyl ether terephthalamide; amorphous polyamides; these polyamide-based polymers modified with aromatic amines such as methylenebenzylamine and meta-xylylene diamine; meta-xylylene diammonium adipate, terminal-modified polyamide polymers thereof, and the like. Among these, terminal-modified polyamide-based polymers are preferred.

The melt flow rate (MFR: 210°C, 2.16 kg) of polyamide-based polymer (b2) is preferably 0.1 g/10 min to 30 g/10 min. Polyamide-based polymer (b2) having an MFR in this range can react optimally with acid-modified polyolefin (d) as the compatibilizer to improve dispersibility.

Polyamide polymer (b2) may be an individual substance or a mixture of two or more substances containing different copolymer components or having different physical properties.

### <Acid-Modified Polyolefin (c)>

Acid-modified polyolefin (c) may be a graft-modified polyolefin obtained by graft-modifying a polyolefin with an acid or an olefin-based copolymer obtained by copolymerizing an olefin and an acid. Such acid-modified polyolefins may be used individually or in combination.

In particular, acid-modified polyolefin (c) is preferably modified polyolefin obtained by modification with an unsaturated carboxylic acid and/or its derivatives.

Preferably, the acid-modified polyolefin (c) is obtained by acid-modifying the same polyolefin-based polymers polyolefin-based polymer (a) from the viewpoint of good compatibility with polyolefin-based polymer (a). For example, if polyolefin-based polymer (a) is polypropylene, acid-modified polyolefin (c) is preferably acid-modified polypropylene. If polyolefin-based polymer (a) is polyethylene, acid-modified polyolefin (c) is preferably acid-modified polyethylene.

Examples of the unsaturated carboxylic acid used for graft-modification to acid-modified polyolefin (c) include acrylic acid, methacrylic acid, fumaric acid, itaconic acid, and maleic acid. Unsaturated carboxylic acid derivatives include acid anhydrides, such as maleic anhydride and itaconic anhydride. Among these, maleic anhydride is most preferred.

The melt flow rate (MFR: 190°C, 2.16 kg) of acid-modified polyolefin (c) is from 0.01 g/10 min to less than 15 g/10 min and preferably 0.5 g/10 min to 10 g/10 min. Acid-modified polyolefin (c) having an MFR in such a range has a viscosity well-balanced with the viscosities of polyolefin-based polymer (a) and acid-modified polyolefin (d). Consequently, the dispersibility of polar polymer (b) is improved, and the impact resistance of formed products is enhanced.

The density of acid-modified polyolefin (c) is preferably 0.855 g/cm³ to 0.955 g/cm³. Acid-modified polyolefin (c) having a density in this range can reduce foreign matter produced in the extrusion step without degrading transparency and prevent the decrease in the mechanical strength of the recycled film as well as keep its appearance good.

The amount of the unsaturated carboxylic acid and/or its derivatives contained in acid-modified polyolefin (c) is preferably 0.001% to 3% by mass to acid-modified polyolefin (c). Acid-modified polyolefin (c) containing such an amount of unsaturated carboxylic acid and/or its derivatives allows polar polymer (b) to disperse more sufficiently in the polymer composition of the present invention, increasing formability.

Acid-modified polyolefin (c) may be an individual substance or a mixture of two or more substances different in polymer form before modification or physical properties.

### <Proportions in Composition>

Preferably, the polymer composition of the present invention contains 0.1 to 20 parts by mass of polar polymer (b) and 0.1 to 25 parts by mass of acid-modified polyolefin (d) relative to 100 parts by mass of polyolefin-based polymer (a).

If the proportion of polar polymer (b) is less than 0.1 part by mass, polar polymer (b) cannot provide sufficient barrier properties. If the proportion of polar polymer (b) exceeds 20 parts by mass, the impact resistance of the resulting formed product tends to be reduced. Preferably, the proportion of polar polymer (b) is 1 to 15 parts by mass, more preferably 5 to 10 parts by mass, relative to 100 parts by mass of polyolefin-based polymer (a).

If the proportion of acid-modified polyolefin (d) is less than 0.1 part by mass, the effect of polar polymer (b) finely dispersed in the polymer composition cannot be sufficiently produced, and the decrease in the transparency of the recycling composition and foreign matter produced during the extrusion step cannot be sufficiently prevented. If the proportion of acid-modified polyolefin (d) exceeds 25 parts by mass, foreign matter production cannot be sufficiently prevented during the extrusion step. Preferably, the proportion of acid-modified polyolefin (d) is 0.5 to 15 parts by mass, more preferably 1 to 10 parts by mass, relative to 100 parts by mass of polyolefin-based polymer (a).

When the polymer composition of the present invention contains acid-modified polyolefin (c), the proportion of acid-modified polyolefin (C) is preferably 0.1 to 20 parts by mass relative to 100 parts by mass of polyolefin-based polymer (a), particularly 1 to 18 parts by mass, more particularly 5 to 15 parts by mass. Acid-modified polyolefin (c) contained in such a proportion allows polar polymer (b) to disperse more favorably in the polymer composition to increase the impact resistance of the resulting formed product.

### <Other Constituents>

The polymer composition of the present invention may contain other polymers or optional additives (these are hereinafter referred to as "other constituents") apart from polyolefin-based polymer (a), polar polymer (b), acid-modified polyolefin (c), and acid-modified polyolefin (d) depending on the application to the extent that the composition does not significantly impair the advantageous effect of the present invention. Such other constituents may be used individually or in combination.

Examples of the additives include antioxidants, UV absorbers, plasticizers, lubricants, fillers, and antistatic agents. The total additive content of the polymer composition of the present invention is generally 50% by mass or less, preferably 20% by mass or less, and more preferably 10% by mass or less.

### <Preparation of Polymer Composition>

The constituents of the polymer composition of the present invention may be mixed in any manner without particular limitation, and examples include:
a manner of dry blending polyolefin-based polymer (a), polar polymer (b), and acid-modified polyolefin (d) and, optionally, acid-modified polyolefin (c) and other constituents at one time for melt-kneading;
a manner of previously melt-kneading polyolefin-based polymer (a), polar polymer (b), and acid-modified polyolefin (d) and, optionally, a part or some of acid-modified polyolefin (c) and other constituents and adding the rest of the constituents, followed by melt-kneading; and
a manner of mixing a multilayer structure containing polyolefin-based polymer (a), polar polymer (b), and acid-modified polyolefin (d) and, optionally, some or all of acid-modified polyolefin (c) and other constituents with the rest of the constituents, followed by melt-kneading.

For preparing the polymer composition of the present invention, preferably, multilayer packaging materials including a polyolefin-based polymer (a) layer and a polar polymer (b) layer or multilayer packaging materials including a polyolefin-based polymer (a) layer, a polar polymer (b) layer, and an acid-modified polyolefin (c) layer are collected and melt-kneaded together with a compatibilizer containing acid-modified polyolefin (d). The collected multilayer packaging materials mentioned herein refer to scraps, for example, with burrs or the like, produced when multilayer packaging material is formed into a shape or rejected products in forming.

The additive added when such collected materials are melt-kneaded is called a compatibilizer, and a compatibilizer containing acid-modified polyolefin (d) is used herein.

The acid-modified polyolefin (d) content of the compatibilizer is preferably 5% to 100% by mass. More preferably, the acid-modified polyolefin (d) content is 10% by mass or more, still more preferably 20% by mass or more, and particularly 50% by mass or more.

In melt-kneading, specifically, the constituents are uniformly mixed in a predetermined proportion with a Henschel mixer, ribbon blender, V-type blender, or the like and then kneaded in a multi-screw kneading extruder, such as a twin-screw kneading extruder TEX 25 manufactured by the Japan Steel Works, Ltd.

As with the temperature in the graft modification to the acid-modified polyolefin (d), the melt-kneading temperature of the constituents is generally 100°C to 300°C, preferably 120°C to 280°C, and more preferably 150°C to 250°C.

### <Formed Product>

The polymer composition of the present invention can be subjected to forming to yield a formed product (hereinafter also referred to as "formed product of the present invention").

The formed product of the present invention may be in the form of, for example, films, sheets, tapes, cups, trays, tubes, bottles, pipes, filaments, profile extrusions, and indeterminate shape products.

Any forming process applicable to common polymer compositions can be applied to the forming process of the polymer composition of the present invention without particular limitation.

For example, extrusion, blow molding, injection molding, thermoforming, or the like may be applied.

In forming, a heat stretching process is often applied to improve the physical properties of the formed product or to form a container with a desired shape. The heat stretching process mentioned here refers to the operation of uniformly forming a uniformly heated formed product in a film, sheet, or parison shape into cups, trays, tubes, bottles, or films by chucking, plugging, vacuum force, pressure air force, blowing, or other means. Stretching methods include roll stretching, tenter stretching, tubular stretching, stretch-blow, vacuum forming, compressed-air forming, and vacuum pressure forming. Stretching may be uniaxial or biaxial. In biaxial stretching, either simultaneous or sequential biaxial stretching may be used. The temperature for stretching is generally 60°C to 170°C and preferably 80°C to 160°C.

### EXAMPLES

Specific embodiments of the present invention will be described in further detail with reference to examples hereinafter. The present invention is not limited to the following examples as long as the present invention is within the gist thereof.

The values of various production conditions and evaluation results in the following examples are to be understood as preferred upper or lower limit values of embodiments of the present invention, and preferred ranges may be a range defined by a combination of the upper or lower limit value and a value of an example described below or by a combination of values of examples described below.

The raw materials used in the preparation of the modified copolymer and the regrind composition in the following examples and comparative examples are as follows.

### [Modified Copolymer Raw Materials]

### <Component (A): Ethylene-butene copolymer>

- A-1: TAFMER (registered trademark) A35070S (MFR (190°C, load 2.16 kg): 35 g/10 minutes, density: 0.870 g/cm³) manufactured by Mitsui Chemicals, Inc.
- A-2: TAFMER (registered trademark) A4085S (MFR (190°C, load 2.16 kg): 3.6 g/10 minutes, density: 0.885 g/cm³) manufactured by Mitsui Chemicals, Inc.
- A-3: TAFMER (registered trademark) A20085S (MFR (190°C, load 2.16 kg): 18 g/10 minutes, density: 0.885 g/cm³) manufactured by Mitsui Chemicals, Inc.
- A-4: TAFMER (registered trademark) A70050S (MFR (190°C, load 2.16 kg): 70 g/10 minutes, density: 0.893 g/cm³) manufactured by Mitsui Chemicals, Inc.

### <Component (B): Radical generator>

- Organic peroxide Perhexa 25B manufactured by NOF Corporation

### <Component (C): Unsaturated carboxylic acid component>

- Maleic anhydride commercial product

### <Component (D): Ethylene-octene copolymer>

- D-1: AFFINITY (registered trademark) GA1900 (MFR (190°C, load 2.16 kg): 1000 g/10 minutes, density: 0.870 g/cm³) manufactured by Dow inc.

### [Regrind Composition Material]

- Polyethylene: Novatec (registered trademark) UF230 (MFR (190°C, load 2.16 kg): 1 g/10 minutes, density: 0.921 g/cm³) manufactured by Japan Polyethylene Corporation
- EVOH: SoarnoL (registered trademark) DC3203RB (MFR (210°C, load 2.16 kg): 3.8 g/10 minutes, density: 1.19 g/cm³, ethylene unit content: 32 mol%, degree of saponification: 99.9 mol%) manufactured by Mitsubishi Chemical Corporation
- Adhesive polymer: Modic (registered trademark) M512 (MFR (190°C, load 2.16 kg): 1.0 g/10 minutes, density: 0.900 g/cm³) manufactured by Mitsubishi Chemical Corporation

### [Preparation of Modified Copolymer]

### <Synthesis Example 1>

A dry-blended mixture of 100 parts by mass of constituent (A-1), 0.03 part by mass of constituent (B), and 0.15 part by mass of constituent (C) was melt-kneaded in a twin-screw extruder (TEX 25 α III manufactured by Japan Steel Works, Ltd., D = 25 mm, L/D = 52.5) at a set temperature of 230°C, a screw rotational speed of 400 rpm, an extrusion rate of 20 kg/h and strand-cut into pellets of maleic anhydride-modified ethylene/butene copolymer (A'-1-1). The MFR (190°C, 2.16 kg), density, and grafting ratio of the resulting modified ethylene/butene copolymer (A'-1-1) were measured by the above-described methods. The measurement results are presented in Table-1.

### <Synthesis Examples 2 to 8>

Modified copolymers (A'-1-2), (A'-1-3), (A'-1-4), (A'-2), (A'-3), (A'-4), and (D'-1) were each prepared in the same manner as Synthesis Example 1 except for changing the composition to that presented in Table-1. The MFR (190°C, 2.16 kg), density, and grafting ratio of the resulting modified copolymers were measured as in Synthesis Example 1. The measurement results are presented in Table-1.

**<Table-1 >**

| | | | Synthesis Example 1 | Synthesis Example 2 | Synthesis Example 3 | Synthesis Example 4 | Synthesis Example 5 | Synthesis Example 6 | Synthesis Example 7 | Synthesis Example 8 |
|---|---|---|---|---|---|---|---|---|---|---|
| Modified copolymer | | | A' -1-1 | A' -1-2 | A' -1-3 | A' -1-4 | A' -2 | A' -3 | A' -4 | D' -1 |
| Compounding composition (parts by mass) | Component (A): Ethylene-butene copolymer | A-1 (A350705) | 100 | 100 | 100 | 100 | | | | |
| | | A-2 (A4085S) | | | | | 100 | | | |
| | | A-3 (A20085S) | | | | | | 100 | | |
| | | A-4 (A70050S) | | | | | | | 100 | |
| | Component (D): Ethylene-octene copolymer | D-1 (AFFINITY GA 1900) | | | | | | | | 100 |
| | Component (B): Radical generator | | 0.03 | 0.03 | 0.03 | 0.04 | 0.03 | 0.03 | 0.03 | 0.03 |
| | Component (C): Unsaturated carboxylic acid component | | 0.15 | 0.70 | 1. 20 | 0.7 | 0.70 | 0.7 | 0.70 | 1.00 |
| Measurement result | Grafting rate | mass% | 0.1 | 0.5 | 0.9 | 0.5 | 0.6 | 0.5 | 0.6 | 0.9 |
| | MFR(190°C, 2.16kg) | g/10 minutes | 32 | 28 | 27 | 22 | 2 | 13 | 59 | 640 |
| | Density | g/cm³ | 0.870 | 0.870 | 0.870 | 0.870 | 0.885 | 0.885 | 0.893 | 0.879 |
| Remarks | | | Example of the Present Invention | | | | Comparative Example | | | |

### [Preparation of Regrind Composition]

### <Example 1>

To 77 parts by mass of NOVATEC (registered trademark) UF230 produced by Japan Polyethylene Corporation, 10 parts by mass of SoarnoL (registered trademark) DC3203RB produced by Mitsubishi Chemical Corporation, and 10 parts by mass of Modic (registered trademark) M512 produced by Mitsubishi Chemical Corporation, 3 parts by mass of modified ethylene/butene copolymer (A'-1-1) of Synthesis Example 1 was mixed as the compatibilizer by dry blending. The resulting mixture was melt-kneaded in a twin-screw extruder (TEX 25 α III manufactured by Japan Steel Works, Ltd., D = 25 mm, L/D = 52.5) at a set temperature of 210°C, a screw rotational speed of 400 rpm, an extrusion rate of 20 kg/h and strand-cut into pellets of a regrind composition. The resulting regrind composition was used as a 1-pass product. The regrind composition of the resulting 1-pass product was further melt-kneaded again in the twin-screw extruder under the above conditions, and the resulting regrind composition was used as a 2-pass product. The following (1) to (4) were evaluated for these compositions. The results are presented in Table-2.

### <Examples 2 to 4 and Comparative Examples 1 to 5>

Except for changing the composition to that presented in Table-2, 1-pass and 2-pass products of each regrind composition were produced in the same manner as in Example 1. The following (1) to (4) were evaluated for the resulting regrind compositions. The results are presented in Table-2.

### [Evaluation]

### (1) Transparency

Films of 0.1 mm in thickness were formed with a single layer T-die film molding machine (extruder: 50 mm in diameter, lip opening: 0.3 mm) manufactured by GSI Creos Corporation at a set temperature of 200°C, a screw rotational speed of 20 rpm. The resulting films were visually compared to each other. Highly transparent films were determined to be good, slightly opaque films were determined to be fair, and opaque films were determined to be poor.

### (2) Internal HAZE

The internal Haze of the 0.1 mm thick films formed above was measured at n = 3 with a HAZE meter and averaged. The internal Haze is a measure of the dispersion of EVOH in polyethylene. The smaller the internal Haze value, the finer and better the dispersion of EVOH. In this evaluation, the films exhibiting an internal Haze value of 17% or less are considered good in EVOH dispersion.

### (3) Tensile Strength at Break

The tensile strength at break of the 0.1 mm thick films formed above was measured at n = 3 according to JIS K 7161 and averaged. The films having a tensile strength at break of 25 MPa or more can be good in mechanical strength.

### (4) Amount of Adherent Foreign Matter

The amount of low-molecular-weight pyrolysates precipitated on the die head was measured after a one-hour extrusion performed under the above-described conditions. When the amount of adherent foreign matter is 0.25 g or less, it can be considered good in thermal stability.

**<Table-2>**

| | | | Example 1 | Example 2 | Example 3 | Example 4 | Comparative Example 1 | Comparative Example2 | Comparative Example3 | Comparative Example4 | Comparative Example5 |
|---|---|---|---|---|---|---|---|---|---|---|---|
| Regrind composition formulation (parts by mass) | Polyethylene | UF230 | 77 | 77 | 77 | 77 | 77 | 77 | 77 | 77 | 80 |
| | EVOH | DC3203RB | 10 | 10 | 10 | 10 | 10 | 10 | 10 | 10 | 10 |
| | Adhesive polymer | M512 | 10 | 10 | 10 | 10 | 10 | 10 | 10 | 10 | 10 |
| | Compatibilizer (Modified copolymer) 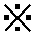 | A' -1-1 (32, 0.870, 0.1) | 3 | | | | | | | | |
| | | A' -1-2 (28, 0.870, 0.5) | | 3 | | | | | | | |
| | | A' -1-3 (27, 0.870, 0.9) | | | 3 | | | | | | |
| | | A' -1-4 (22, 0.870, 0.5) | | | | 3 | | | | | |
| | | A' -2 (2, 0.885, 0.6) | | | | | 3 | | | | |
| | | A' -3 (13, 0.885, 0.5) | | | | | | 3 | | | |
| | | A' -4 (59, 0.893, 0.6) | | | | | | | 3 | | |
| | | D' -1 (640, 0.879, 0.9) | | | | | | | | 3 | |
| Evaluation results | Transparency | | Δ | Δ | ○ | ○ | Δ | Δ | Δ | ○ | × |
| | Internal HAZE (%) | 1pass product | 17 | 15 | 15 | 15 | 15 | 15 | 14 | 13 | 26 |
| | | 2pass product | 17 | 16 | 17 | 15 | 16 | 16 | 16 | 19 | 32 |
| | Tensile strength at break (MPa) | 1pass product | 25 | 26 | 27 | 26 | 25 | 25 | 27 | 28 | 20 |
| | | 2pass product | 25 | 25 | 26 | 26 | 22 | 24 | 23 | 25 | 17 |
| | Adherent foreign matter (g) | 1pass product | 0.15 | 0.15 | 0.18 | 0.17 | 0.28 | 0.32 | 0.35 | 0.21 | 0.16 |
| | | 2pass product | 0.20 | 0.17 | 0.19 | 0.22 | 0.28 | 0.33 | 0.38 | 0.18 | 0.59 |

| | | | | | | | | | | | |
|---|---|---|---|---|---|---|---|---|---|---|---|
| 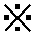 Parentheses = MFR (g/10 min), Density (g/cm³), Graft rate (mass%) | | | | | | | | | | | |

### [Consideration]

As shown in Table-2, Examples 1 to 4 using any of the modified ethylene copolymers of the present invention reduced or did not produce adherent foreign matter without degrading transparency. Additionally, they were excellent in internal Haze, mechanical properties, and recyclability.

On the other hand, Comparative Example 1 using modified ethylene/butene copolymer (A'-2) with an MFR of 2 g/10 min, Comparative Example 2 using modified ethylene/butene copolymer (A'-3) with an MFR of 13 g/10 min, and Comparative Example 3 using modified ethylene/butene copolymer (A'-4) with an MFR of 59 g/10 min produced large amounts of adherent foreign matter.

Comparative Example 4 using modified ethylene/octene copolymer (D'-1) with an MFR of 640 g/10 min exhibited a high internal Haze in the evaluation of the film made of the 2-pass regrind composition and was thus inferior in recyclability.

Comparative Example 5, which did not use any compatibilizer, showed significant degradation in 2-pass extrusion in internal Haze, tensile strength at break, and adherent foreign matter. Hence, regrind compositions composed of polyethylene, EVOH, and an adhesive resin polymer are difficult to recycle.

## Claims

1. Use of a modified ethylene copolymer as a compatibilizer for compatibilization of polar polymers with nonpolar polymers, wherein the modified ethylene copolymer is produced by modifying a copolymer of an ethylene monomer and one or two or more of α-olefin monomers with 4 to 8 carbon atoms with an unsaturated carboxylic acid and/or an anhydride thereof,
wherein the modified ethylene copolymer has a melt flow rate (MFR: 190°C, 2.16 kg) of 15 g/10 min to 39 g/10 min.

2. Use of a modified ethylene copolymer as a recycling agent in a recycling process wherein nonpolar polymers and polar polymers are used as recycling materials, wherein the modified ethylene copolymer is produced by modifying a copolymer of an ethylene monomer and one or two or more of α-olefin monomers with 4 to 8 carbon atoms with an unsaturated carboxylic acid and/or an anhydride thereof,
wherein the modified ethylene copolymer has a melt flow rate (MFR: 190°C, 2.16 kg) of 15 g/10 min to 39 g/10 min.

3. A compatibilization method comprising: compatibilizing a polar polymer with a nonpolar polymer in the presence of a modified ethylene copolymer having a melt flow rate (MFR: 190°C, 2.16 kg) of 15 g/10 min to 39 g/10 min and produced by modifying a copolymer of an ethylene monomer and one or two or more of α-olefin monomers with 4 to 8 carbon atoms with an unsaturated carboxylic acid and/or an anhydride thereof.

4. The use according to Claim 1, wherein the modified ethylene copolymer has a density of 0.855 g/cm³ to 0.895 g/cm³.

5. The use according to Claim 2, wherein the modified ethylene copolymer has a density of 0.855 g/cm³ to 0.895 g/cm³.

6. The compatibilization method according to Claim 3,
wherein the modified ethylene copolymer has a density of 0.855 g/cm³ to 0.895 g/cm³.

7. The use according to Claim 1 or Claim 4, wherein the modified ethylene copolymer has a grafting ratio of 0.1% by mass to 1.0% by mass.

8. The use according to Claim 2 or Claim 5, wherein the modified ethylene copolymer has a grafting ratio of 0.1% by mass to 1.0% by mass.

9. The compatibilization method according to Claim 3 or Claim 6, wherein the modified ethylene copolymer has a grafting ratio of 0.1% by mass to 1.0% by mass.

10. The use according to Claim 1 or Claim 4, wherein the modified ethylene copolymer is an ethylene-butene copolymer.

11. The use according to Claim 2 or Claim 5, wherein the modified ethylene copolymer is an ethylene-butene copolymer.

12. The compatibilization method according to Claim 3 or Claim 6, wherein the modified ethylene copolymer is an ethylene-butene copolymer.

13. The compatibilization method according to Claim 3 or Claim 6, wherein the nonpolar polymer is a polyethylenebased polymer.

## Patentansprüche

1. Verwendung eines modifizierten Ethylencopolymers als Kompatibilisierungsmittel zur Kompatibilisierung von polaren Polymeren mit nicht-polaren Polymeren, wobei das modifizierte Ethylencopolymer durch Modifizieren eines Copolymers von einem Ethylenmonomer und einem oder zwei oder mehreren von α-Olefinmonomeren mit 4 bis 8 Kohlenstoffatomen mit einer ungesättigten Carbonsäure und/oder einem Anhydrid davon hergestellt wird,
wobei das modifizierte Ethylencopolymer eine Schmelzflussrate (MFR: 190°C, 2,16 kg) von 15 g/10 min bis 39 g/10 min aufweist.

2. Verwendung eines modifizierten Etylencopolymers als ein Recyclingmittel in einem Recyclingverfahren, wobei nicht-polare Polymere und polare Polymere als Recyclingmaterialien verwendet werden, wobei das modifizierte Ethylencopolymer durch Modifizieren eines Copolymers von einem Ethylenmonomer und einem oder zwei oder mehreren von α-Olefinmonomeren mit 4 bis 8 Kohlenstoffatomen mit einer ungesättigten Carbonsäure und/oder einem Anhydrid davon hergestellt wird,
wobei das modifizierte Ethylencopolymer eine Schmelzflussrate (MFR: 190°C, 2,16 kg) von 15 g/10 min bis 39 g/10 min aufweist.

3. Kompatibilisierungsverfahren, umfassend:
Kompatibilisieren eines polaren Polymers mit einem nicht-polaren Polymer in Gegenwart eines modifizierten Ethylencopolymers, das eine Schmelzflussrate (MFR: 190°C, 2,16 kg) von 15 g/10 min bis 39 g/10 min aufweist und durch Modifizieren eines Copolymers von einem Ethylenmonomer und einem oder zwei oder mehreren von α-Olefinmonomeren mit 4 bis 8 Kohlenstoffatomen mit einer ungesättigten Carbonsäure und/oder einem Anhydrid davon hergestellt ist.

4. Verwendung gemäß Anspruch 1, wobei das modifizierte Ethylencopolymer eine Dichte von 0,855 g/cm³ bis 0,895 g/cm³ aufweist.

5. Verwendung gemäß Anspruch 2, wobei das modifizierte Ethylencopolymer eine Dichte von 0,855 g/cm³ bis 0,895 g/cm³ aufweist.

6. Kompatibilisierungsverfahren gemäß Anspruch 3, wobei das modifizierte Ethylencopolymer eine Dichte von 0,855 g/cm³ bis 0,895 g/cm³ aufweist.

7. Verwendung gemäß Anspruch 1 oder Anspruch 4, wobei das modifizierte Ethylencopolymer einen Pfropfanteil von 0,1 Masse-% bis 1,0 Masse-% aufweist.

8. Verwendung gemäß Anspruch 2 oder Anspruch 5, wobei das modifizierte Ethylencopolymer einen Pfropfanteil von 0,1 Masse-% bis 1,0 Masse-% aufweist.

9. Kompatibilisierungsverfahren gemäß Anspruch 3 oder Anspruch 6, wobei das modifizierte Ethylencopolymer einen Pfropfanteil von 0,1 Masse-% bis 1,0 Masse-% aufweist.

10. Verwendung gemäß Anspruch 1 oder Anspruch 4, wobei das modifizierte Ethylencopolymer ein Ethylen-Buten-Copolymer ist.

11. Verwendung gemäß Anspruch 2 oder Anspruch 5, wobei das modifizierte Ethylencopolymer ein Ethylen-Buten-Copolymer ist.

12. Kompatibilisierungsverfahren gemäß Anspruch 3 oder Anspruch 6, wobei das modifizierte Ethylencopolymer ein Ethylen-Buten-Copolymer ist.

13. Kompatibilisierungsverfahren gemäß Anspruch 3 oder Anspruch 6, wobei das nicht-polare Polymer ein Polymer auf Polyethylenbasis ist.

## Revendications

1. Utilisation d'un copolymère d'éthylène modifié en tant qu'agent de compatibilité pour la compatibilisation de polymères polaires avec des polymères non polaires, dans laquelle le copolymère d'éthylène modifié est produit par modification d'un copolymère d'un monomère d'éthylène et d'un ou de deux ou plus monomères d'α-oléfine présentant de 4 à 8 atomes de carbone avec un acide carboxylique insaturé et/ou un anhydride de celui-ci,
dans laquelle le copolymère d'éthylène modifié présente un indice de fluidité à chaud (MFR : 190 °C, 2,16 kg) de 15 g/10 min à 39 g/10 min.

2. Utilisation d'un copolymère d'éthylène modifié en tant qu'agent de recyclage dans un processus de recyclage dans lequel des polymères non polaires et des polymères polaires sont utilisés en tant que matériaux de recyclage, dans laquelle le copolymère d'éthylène modifié est produit par modification d'un copolymère d'un monomère d'éthylène et d'un ou de deux ou plus monomères d'α-oléfine présentant de 4 à 8 atomes de carbone avec un acide carboxylique insaturé et/ou un anhydride de celui-ci,
dans laquelle le copolymère d'éthylène modifié présente un indice de fluidité à chaud (MFR : 190 °C, 2,16 kg) de 15 g/10 min à 39 g/10 min.

3. Procédé de compatibilisation comprenant : la compatibilisation d'un polymère polaire avec un polymère non polaire en présence d'un copolymère d'éthylène modifié présentant un indice de fluidité à chaud (MFR : 190 °C, 2,16 kg) de 15 g/10 min à 39 g/10 min et produit par modification d'un copolymère d'un monomère d'éthylène et d'un ou de deux ou plus monomères d'α-oléfine présentant de 4 à 8 atomes de carbone avec un acide carboxylique insaturé et/ou un anhydride de celui-ci.

4. Utilisation selon la revendication 1, dans laquelle le copolymère d'éthylène modifié présente une densité de 0,855 g/cm³ à 0,895 g/cm³.

5. Utilisation selon la revendication 2, dans laquelle le copolymère d'éthylène modifié présente une densité de 0,855 g/cm³ à 0,895 g/cm³.

6. Procédé de compatibilisation selon la revendication 3, dans laquelle le copolymère d'éthylène modifié présente une densité de 0,855 g/cm³ à 0,895 g/cm³.

7. Utilisation selon la revendication 1 ou revendication 4, dans laquelle le copolymère d'éthylène modifié présente un taux de greffage de 0,1 % en masse à 1,0 % en masse.

8. Utilisation selon la revendication 2 ou revendication 5, dans laquelle le copolymère d'éthylène modifié présente un taux de greffage de 0,1 % en masse à 1,0 % en masse.

9. Procédé de compatibilisation selon la revendication 3 ou revendication 6, dans lequel le copolymère d'éthylène modifié présente un taux de greffage de 0,1 % en masse à 1,0 % en masse.

10. Utilisation selon la revendication 1 ou revendication 4, dans laquelle le copolymère d'éthylène modifié est un copolymère d'éthylène-butène.

11. Utilisation selon la revendication 2 ou revendication 5, dans laquelle le copolymère d'éthylène modifié est un copolymère d'éthylène-butène.

12. Procédé de compatibilisation selon la revendication 3 ou revendication 6, dans lequel le copolymère d'éthylène modifié est un copolymère d'éthylène-butène.

13. Procédé de compatibilisation selon la revendication 3 ou revendication 6, dans lequel le polymère non polaire est un polymère à base de polyéthylène.
